# EUROPÄISCHE PATENTSCHRIFT

(11) **EP 1 554 639 B1**
(45) Veröffentlichungstag und Bekanntmachung des Hinweises auf die Patenterteilung: **12.12.2007**
(21) Anmeldenummer: 03753317.1
(22) Anmeldetag: 19.09.2003
(51) Int. Cl.: G05D 1/02

(54) **VERFAHREN UND ANORDNUNG SOWIE COMPUTERPROGRAMM MIT PROGRAMMCODE-MITTELN UND COMPUTERPROGRAMM-PRODUKT ZUR BILDUNG EINER GRAPHENSTRUKTUR ZUR BESCHREIBUNG EINER FLÄCHE MIT EINER FREIFLÄCHE UND EINER BELEGTFLÄCHE**
METHOD AND SYSTEM, COMPUTER PROGRAM COMPRISING PROGRAM CODE MEANS, AND COMPUTER PROGRAM PRODUCT FOR FORMING A GRAPH STRUCTURE IN ORDER TO DESCRIBE AN AREA WITH A FREE AREA AND AN OCCUPIED AREA
PROCEDE, DISPOSITIF ET PROGRAMME INFORMATIQUE COMPRENANT DES SYSTEMES DE CODES DE PROGRAMMATION ET UN PRODUIT DE PROGRAMME INFORMATIQUE, POUR CONSTITUER UNE STRUCTURE GRAPHIQUE DESTINEE A DECRIRE UNE SURFACE COMPRENANT UNE SURFACE LIBRE ET UNE SURFACE OCCUPEE

(30) Priorität: 23.10.2002 DE 10249422
(43) Veröffentlichungstag der Anmeldung: 20.07.2005
(73) Patentinhaber: SIEMENS AKTIENGESELLSCHAFT, 80333 München (DE)
(72) Erfinder: DE GRAEVE, Charles-Marie, F-54420 Saulxures-les-Nancy (FR); FIEGERT, Michael, 81739 München (DE)
(86) Internationale Anmeldenummer: PCT/DE2003/003121
(87) Internationale Veröffentlichungsnummer: WO 2004/040390

(56) Entgegenhaltungen:
- NAGATANI K ET AL: "Sensor, based navigation for car-like mobile robots using generalized voronoi graph" PROCEEDINGS OF THE 2001 IEEE/RSJ INTERNATIONAL CONFERENCE ON INTELLIGENT ROBOTS AND SYSTEMS. (IROS 2001). MAUI, HAWAII, OCT. 29 - NOV. 3, 2001, IEEE/RSJ INTERNATIONAL CONFERENCE ON INTELLIGENT ROBOTS AND SYSTEMS, NEW YORK, NY: IEEE, US, Bd. 1 OF 4, 29. Oktober 2001 (2001-10-29), Seiten 1017-1022, XP010571830 ISBN: 0-7803-6612-3
- JENNINGS J ET AL: "Distributed map-making and navigation in dynamic environments" INTELLIGENT ROBOTS AND SYSTEMS, 1998. PROCEEDINGS., 1998 IEEE/RSJ INTERNATIONAL CONFERENCE ON VICTORIA, BC, CANADA 13-17 OCT. 1998, NEW YORK, NY, USA,IEEE, US, 13. Oktober 1998 (1998-10-13), Seiten 1695-1701, XP010311424 ISBN: 0-7803-4465-0
- BOADA B L ET AL: "Localization and modelling approach using topo-geometric maps" PROCEEDINGS OF THE 2002 IEEE/RSJ INTERNATIONAL CONFERENCE ON INTELLIGENT ROBOTS AND SYSTEMS. (IROS 2002). LAUSANNE, SWITZERLAND, SEPT. 30 - OCT. 4, 2002, IEEE/RSJ INTERNATIONAL CONFERENCE ON INTELLIGENT ROBOTS AND SYSTEMS, NEW YORK, NY: IEEE, US, Bd. 1 OF 3, 30. September 2002 (2002-09-30), Seiten 484-489, XP010609298 ISBN: 0-7803-7398-7
- VICTORINO A C ET AL: "Mobile robot navigation using a sensor-based control strategy" PROCEEDINGS OF THE 2001 IEEE INTERNATIONAL CONFERENCE ON ROBOTICS AND AUTOMATION. ICRA 2001. SEOUL, KOREA, MAY 21 - 26, 2001, PROCEEDINGS OF THE IEEE INTERNATIONAL CONFERENCE ON ROBOTICS AND AUTOMATION, NEW YORK, NY: IEEE, US, Bd. 1 OF 4, 21. Mai 2001 (2001-05-21), Seiten 2753-2758, XP010550560 ISBN: 0-7803-6576-3
- THRUN S ET AL: "Probabilistic mapping of an environment by a mobile robot" ROBOTICS AND AUTOMATION, 1998. PROCEEDINGS. 1998 IEEE INTERNATIONAL CONFERENCE ON LEUVEN, BELGIUM 16-20 MAY 1998, NEW YORK, NY, USA,IEEE, US, 16. Mai 1998 (1998-05-16), Seiten 1546-1551, XP010281274 ISBN: 0-7803-4300-X

## Beschreibung

Die Erfindung betrifft eine Bildung einer Graphenstruktur zur Beschreibung einer Fläche mit einer Freifläche und einer Belegtfläche.

Immer häufiger werden sich wiederholende Tätigkeiten Servicerobotern übertragen. Beispiele für solche Tätigkeiten sind Reinigungsaufgaben, Transportaufgaben, das Ausbringen von Saatgut auf entsprechende Flächen oder beispielsweise das Rasenmähen.

Zur Durchführung der jeweiligen Flächenbearbeitung sind an solchen Servicerobotern jeweils zugehörige Flächenbearbeitungsgeräte, wie eine Reinigungsvorrichtung oder eine Schneidvorrichtung, angebracht.

Eine effiziente Bearbeitung der Fläche durch den Serviceroboter setzt voraus, dass das Flächenbearbeitungsgerät möglichst die gesamte zu bearbeitende Fläche überstreicht, wobei möglich wenig Wege doppelt gefahren werden.

Dazu ist allerdings eine Planung einer geeigneten, effizienten Bearbeitungsbahn von Nöten.

Bahnplanungsverfahren im allgemeinen setzen eine Kenntnis über die geometrischen Gegebenheiten der zu bearbeitenden Fläche voraus. Dazu zählen beispielsweise Informationen über Abmessungen der zu bearbeitenden Fläche und Lagen und Abmessungen darin vorhandener Hindernisse.

In der Regel werden digitale, geometrische Karten verwendet, in welchen die jeweiligen geometrischen Gegebenheiten einer zu bearbeitenden Fläche gespeichert sind. In diesen geometrischen Karten erscheinen solche geometrische Gegebenheiten als sogenannte Freiflächen, beispielsweise hindernisfreie und bearbeitbare Flächen, als auch als Belegtflächen, wie durch Hindernisse belegte, nicht bearbeitbare Flächen.

Anschaulich gesehen entsprechen solche geometrischen Karten sogenannten Pixelbildern, deren Pixel jeweils Bild- und/oder Farbinformation zugeordnet ist. Auch in solchen Pixelbildern, wie Grauwertkarten oder Farbbilder, welche unter anderem in der Bildverarbeitung oder bei einer Objekterkennung verwendet und/oder analysiert und ausgewertet werden, lassen sich Freiflächen und Belegtflächen unterscheiden.

Eine solche digitale, geometrische Karte kann bei entsprechendem Vorwissen vorab erstellt und in einem Serviceroboter gespeichert sein. In diesem Fall kann das Bahnplanungsverfahren bzw. die Bahnplanung vorab durchgeführt werden. Die abzufahrende Bahn ist bei Beginn der Flächenbearbeitung bekannt.

Auch kann eine digitale, geometrische Karte erst während einer Flächenbearbeitung dynamisch erstellt werden. In diesem Fall erfolgt die Bahnplanung während der Flächenbearbeitung.

Verschiedene Verfahren zur Erstellung solcher geometrischen Karten sind aus [11], [12], [13] bekannt.

Bahnplanungsverfahren basierend auf diesen geometrischen Karten sind ebenfalls bekannt. Beispielshaft werden nachfolgend verschiedene Bahnplanungsverfahren genannt.

Sogenannte template-basierte Verfahren zur flächendeckenden Bahnplanung, welche solche geometrischen digitalen Karten verwenden, sind beispielsweise aus [2], [3], [4] bekannt. Ein weiteres Bahnplanungsverfahren [5], welches ebenfalls eine geometrische digitale Karte verwendet, aber einen anderen Ansatz aufweist, verwendet ein Potentialfeld, mit welchem eine zu bearbeitende Fläche überlagert und daraus eine Bearbeitungsbahn bestimmt wird. Weitere Karten-basierte Bahnplanungsverfahren mit ähnlichem Ansatz basierend auf geometrischen Karten sind aus [6] und [7] bekannt.

Neben der Ermittlung einer Bearbeitungsbahn dienen solche geometrischen Karten auch als Grundlage zur Ermittlung einer aktuellen Position bzw. eines Aufenthaltsorts eines mobilen Roboters in einer Fläche (Positionsschätzung). Dieses wird als Lokalisierung oder globale Lokalisierung bezeichnet. Desweiteren dienen solche geometrischen Karten auch zur Orientierung und Navigation des Roboters in einer Fläche.

Entsprechende Verfahren zur Lokalisierung bzw. globalen Lokalisierung, Orientierung und Navigation von mobilen Robotern, basierend auf geometrischen Karten, sind auch bekannt, beispielsweise aus [8].

Nachteilig an diesen geometrischen Karten ist, dass diese erheblichen Speicherplatz benötigen oder abhängig sind von einem Typ der Umgebung. Außerdem erfordern sie bei Verwendung, beispielsweise zur Relokalisierung, hohe Rechenzeiten.

Desweiteren ist von Nachteil, dass die Erstellung solcher geometrischen Karten aufwendig ist und die Karten selbst meist ungenau sind, insbesondere in großen und/oder unstrukturierten Umgebungen.

Auch erweisen sich diese geometrischen Karten bei der Lokalisierung von Robotern in dynamisch veränderlichen Umgebungen als nur beschränkt einsetzbar. Aktuelle und zum Teil nur kurzzeitig veränderte Umgebungen, wie sich in der Fläche aufhaltende Personen oder vorübergehend in der Fläche platzierte Regale u.ä., führen zu veränderten aktuellen lokalen Ausschnittskarten, d.h. zu Veränderungen der Freiflächen und der Belegtflächen, welche Ausschnittskarten sich dann wegen der Veränderungen nur erschwert in der geometrischen (Grund- bzw. Basis-))Karte wiederfinden lassen.

Dazu sind in der Regel zeit- und speicheraufwendige Korrelationsverfahren notwendig. Merkmalsbasierte Suchverfahren scheitern, wenn Umgebungselemente derart verändert werden, dass sie wegen Verdeckungen nicht mehr erkannt werden können.

Selbiges Problem tritt nicht nur bei Interpretation der Pixelbilder als geometrische Karten auf, sondern auch bei einer Objekterkennung in Farbbilder oder Grauwertkarten.

Neben solchen geometrischen Karten sind auch topologische Karten zur Lokalisierung und Navigation von mobilen Robotern in einer Fläche bekannt.

Diese topologischen Karten verwenden zur Beschreibung einer Fläche einen Graphen bzw. eine Graphenstruktur, welcher bzw. welche in der Regel gebildet wird aus einer zusammenhängenden Abfolge von Knoten und Kanten.

Als derartige topologisch verwendete bzw. "topologische" Graphen oder Graphenstrukturen sind zum Beispiel bekannt so genannte Voronoi-Graphen (VG) oder generalisierte Voronoi-Graphen (GVG) [8], [9], [10] sowie so genannte "medial axis" [1], [8].

Die "medial axis" (MA) werden dabei gebildet durch die Orte bzw. die Menge von Kreismittelpunkten aller maximal großer Kreise, die vollständig in einer abgeschlossenen Fläche liegen und mindestens zweimal tangieren.

Allerdings werden durch diese topologischen Graphen nur Freiflächen einer Fläche beschrieben, nicht aber explizit die Belegtflächen bzw. die Hindernisse in der Fläche und nicht diese in einer solchen Form, welche eine Reproduktion der Hindernisse ermöglichen würde.

Die Beschreibung der Freiflächen durch die Graphen erfolgt dabei strukturell und nicht metrisch, d.h. genauere geometrische Informationen über die Fläche, wie Abstände oder Abmessungen zu Hindernissen, sind den Graphen in der Regel nicht entnehmbar.

Daher eignen sich solche "topologischen" Graphen, wie Voronoi-Graphen oder medial axis, nur eingeschränkt zur Lokalisierung bzw. globalen Lokalisierung, Orientierung oder Navigation eines mobilen Roboters.

Aus [1] ist ein so genannter Shock-Graph (SG) bekannt, welcher dort bei einer Bildverarbeitung bzw. Objekterkennung zur strukturellen Beschreibung von durch Umrisslinien abgeschlossenen Flächen und Formen verwendet wird.

Die Druckschrift [14] betrifft die Navigation von fahrzeugähnlichen mobilen Robotern unter der Verwendung von generalisierten Voronoi-Graphen. Es wird ein Verfahren beschrieben, mit dem ein stetiger Pfad zur Bewegung eines fahrzeugähnlichen mobilen Rotobers basierend auf Voronoi-Graphen erzeugt wird.

Die Druckschrift [15] offenbart die Erzeugung von generalisierten Voronoi-Graphen zur Navigation von mobilen Robotern, wobei für die Knoten der Voronoi-Graphen metrische Informationen hinterlegt werden, um Veränderungen in einer dynamischen Umgebung automatisch zu detektieren.

Die Druckschrift [16] beschreibt die Lokalisation von mobilen Robotern unter der Verwendung einer topo-geometrischen Karte, welche aus einem lokalen Voronoi-Diagramm erzeugt wird. Mit Hilfe der topologischen und geometrischen Information aus der Karte kann die Roboterposition abgeschätzt werden.

In der Druckschrift [17] ist ein Verfahren beschrieben, mit dem sich ein Roboter in einer unbekannten Umgebung auf der Basis von Lasermessungen entlang eines Voronoi-Diagramms bewegen kann.

In dem Dokument [18] wird die Erzeugung von Umgebungskarten mit mobilen Robotern auf der Basis eines statistischen Modells beschrieben.

Der Erfindung liegt die Aufgabe zugrunde, eine Beschreibung einer Fläche mit Freiflächen und Belegtflächen zur Verfügung zu stellen, die einfach zu ermitteln und darzustellen ist sowie geringen Speicherplatz bedarf.

Darüber hinaus soll sie aber ausreichend und insbesondere gegen eine Umgebungsveränderung robuste Information beinhalten, um zur Objekterkennung bei einer Bildverarbeitung einsetzbar zu sein, sowie soll sie zur Lokalisierung bzw. Relokalisierung, Orientierung oder Navigation eines mobilen Roboters, insbesondere bei Umgebungsdynamik, verwendbar sein.

Diese Aufgabe wird durch das Verfahren und die Anordnung sowie durch das Computerprogramm-Produkt zur Ermittlung einer Graphenstruktur zur Beschreibung einer Fläche mit einer Freifläche und einer Belegtfläche mit den Merkmalen gemäß dem jeweiligen unabhängigen Patentanspruch gelöst.

Bei dem Verfahren zur Bildung einer Graphenstruktur zur Beschreibung einer Fläche mit einer Freifläche und einer Belegtfläche wird eine topologische Graphenstruktur für die Freifläche der Fläche ermittelt. Mindestens ein Punkt der topologischen Graphenstruktur wird ausgewählt. Zu dem ausgewählten Punkt der topologischen Graphenstruktur wird ein nächstgelegener Belegtflächenpunkt bestimmt, welcher nächstgelegene Belegtflächenpunkt auf einer Belegtfläche liegt und einen kürzesten Abstand zu dem ausgewählten Punkt der topologischen Graphenstruktur aufweist. Eine Ortsinformation wird für den nächstgelegenen Belegtflächenpunkt ermittelt. Die Graphenstruktur wird zumindest aus dem ausgewählten Punkt der topologischen Graphenstruktur und aus der zugehörigen Ortsinformation des nächstgelegenen Hindernispunktes gebildet.

Die Anordnung zur Bildung einer Graphenstruktur zur Beschreibung einer Fläche mit einer Freifläche und einer Belegtfläche, weist auf folgende miteinander in Kontakt stehenden Einheiten,
- mit einer Strukturermittlungseinheit, mit welcher eine topologische Graphenstruktur für die Freifläche der Fläche ermittelbar ist,
- mit einer Auswahleinheit, mit welcher mindestens ein Punkt der topologischen Graphenstruktur auswählbar ist,
- mit einer Hindernisermittlungseinheit, mit welcher zu dem ausgewählten Punkt der topologischen Graphenstruktur ein nächstgelegener Belegtflächenpunkt bestimmbar ist, welcher nächstgelegene Belegtflächenpunkt auf einer Belegtfläche liegt und einen kürzesten Abstand zu dem ausgewählten Punkt der topologischen Graphenstruktur aufweist,
- mit einer Ortsbestimmungseinheit, mit welcher eine Ortsinformation für den nächstgelegenen Belegtflächenpunkt ermittelbar ist,
- mit einer Strukturbildungseinheit, mit welcher die Graphenstruktur zumindest aus dem ausgewählten Punkt der topologischen Graphenstruktur und aus der zugehörigen Ortsinformation des nächstgelegenen Belegtflächenpunktes bildbar ist.

Anschaulich gesehen werden bei der Erfindung im Gegensatz zu bekannten digitalen, geometrischen Karten, bei welchen jeweils die gesamte Fläche mit allen Belegtflächen bzw. Hindernissen gespeichert wird, nur Form und Topologie einer Freifläche der Fläche in effizienter Form, in diesem Fall unter Verwendung eines topologisch verwendeten bzw. "topologischen" Graphen oder Graphenstruktur, wie zum Beispiel eines Shock-Graphen, einer "medial axis" oder eines Voronoi-Graphen, gespeichert.

Gegebenenfalls, nicht aber notwendigerweise, können diese topologischen Graphen bzw. Graphenstrukturen durch geeignete weitere Information, beispielsweise eine Abstandsinformation, angereichert (annotiert) werden, was beispielsweise zu so genannten annotierten medial axis führt. Derart annotierte topologische Graphen sind allerdings - als besondere Ausgestaltung von topologischen Graphenstrukturen - immer noch topologische Graphen im Sinne der Erfindung.

Ausgehend von dem topologischen Graphen wird mindestens ein Punkt des topologischen Graphen ausgewählt und für diesen der nächstgelegene Hindernispunkt, d.h. ein nächstgelegener Punkt einer Belegtfläche - in der Regel ein Punkt auf einer Kante des nächstgelegenen Hindernisses bzw. der nächstgelegenen Belegtfläche - bestimmt. Für diesen nächstgelegenen Belegtflächenpunkt bzw. Hindernispunkt, bezeichnet als Generator, wird eine Ortsinformation ermittelt, welche die Lage des Generators (relativ zu dem ausgewählten Punkt des topologischen Graphen oder absolut) eindeutig beschreibt.

So kann beispielsweise die Ortsinformation des Generators Koordinaten von diesem sein.

Mindestens aus dem ausgewählten Punkt der topologischen Graphenstruktur und aus der zugehörigen Ortsinformation des Generators wird die Graphenstruktur, auch bezeichnet im Folgenden als Generatorgraph, gebildet.

Besonders vorteilhaft ist, dass die derart gebildete Graphenstruktur bzw. der Generatorgraph robust ist gegen Veränderungen in der Fläche, d.h. gegen Umgebungsdynamik. Dazu trägt insbesondere die Verwendung des Generators bei.

Dadurch eröffnet die Erfindung ein breites Einsatzgebiet, nämlich überall dort, wo digitale Pixelbilder verwendet werden. So eignet sich die Erfindung insbesondere bei einer Lokalisierung von mobilen Einheiten sowie bei einer Objekterkennung im speziellen, wie auch bei einer Bildverarbeitung im Allgemeinen.

Das Computerprogramm-Produkt mit auf einem maschinenlesbaren Träger gespeicherten Programmcode-Mitteln ist eingerichtet, um alle Schritte gemäß des erfindungsgemäßen Verfahrens durchzuführen, wenn das Programm auf einem Computer ausgeführt wird.

Bevorzugte Weiterbildungen der Erfindung ergeben sich aus den abhängigen Ansprüchen.

Die im Weiteren beschriebenen Weiterbildungen beziehen sich sowohl auf die Verfahren als auch auf die Anordnung.

Die Erfindung und die im Weiteren beschriebenen Weiterbildungen können sowohl in Software als auch in Hardware, beispielsweise unter Verwendung einer speziellen elektrischen Schaltung, realisiert werden.

Auch kann die Erfindung oder jede im weiteren beschriebene Weiterbildung durch ein Computerprogramm-Produkt realisiert sein, welches ein Speichermedium aufweist, auf welchem ein Computerprogramm mit Programmcode-Mitteln gespeichert ist, welches die Erfindung oder die Weiterbildung ausführt.

Zur Bildung der topologischen Graphenstruktur können Shock-Graphen [1] oder eine "medial axis" [1], [8] oder auch Voronoi-Graphen [8], [9], [10] bzw. entsprechende Verfahren zur Bildung der beispielhaft genannten Graphenarten herangezogen werden. Die erzeugten Graphen weisen dabei in der Regel eine Abfolge von Knoten und Kanten auf.

Bei einer Weiterbildung ist die Ortsinformation des nächstgelegensten Belegtflächenpunktes bzw. Hindernispunktes eine relative Ortsinformation bezüglich des ausgewählten Punktes, insbesondere eine Abstandsinformation und eine Richtungsinformation. Alternativ dazu kann die Ortsinformation auch eine absolute Ortsinformation sein, insbesondere Koordinaten des nächstgelegensten Belegtflächenpunktes bzw. Hindernispunktes.

Auch ist es sinnvoll, mehrere Punkte der topologischen Graphenstruktur auszuwählen, zu welchen mehreren ausgewählten Punkten jeweils der nächstgelegenste Belegtflächenpunkt bzw. Hindernispunkt und die dazu zugehörige Ortsinformation ermittelt werden. Die Graphenstruktur bzw, der Generatorgraph wird dann gebildet aus allen ausgewählten Punkten und den zugehörigen Ortsinformationen.

Bei der Auswahl des einen oder der mehreren ausgewählten Punkten kann eine Regelmäßigkeit der topologischen Graphenstruktur berücksichtigt werden. Je regelmäßiger die topologische Graphenstruktur ist, desto weniger ausgewählte Punkte reichen aus, um die topologische Graphenstruktur zu beschreiben. Eine Interpolation zwischen den ausgewählten Punkten nähert aber in solchen Fällen die zugrundeliegende Graphenstruktur an.

Ferner kann es sinnvoll sein, wenn als ausgewählter Punkt bzw. als ausgewählte Punkte ein bzw. mehrere Knoten der topologischen Graphenstruktur ausgewählt werden.

Anzumerken ist allerdings, dass prinzipiell jeder Punkte der topologischen Graphenstruktur ohne Beschränkung der Allgemeinheit auswählbar ist.

Auch ist es möglich, für den ausgewählten Punkt der topologischen Graphenstruktur mindestens einen weiteren nächstgelegensten Hindernispunkt oder auch mehrere weitere nächstgelegenste Hindernispunkte zu ermitteln, für den bzw. für die dann jeweils die zugehörige Ortsinformation ermittelt wird bzw. werden. Bei der Bildung der Graphenstruktur können diese dann auch mitberücksichtigt werden.

In Kombination in vorigen vorgeschlagenen Weiterbildungen ist es möglich, einen Knotenpunkt der topologischen Graphenstruktur auszuwählen und für den Knotenpunkt mindestens zwei nächstgelegenste Belegtflächenpunkte bzw. Hindernispunkte und deren zugehörige Ortsinformationen zu ermitteln.

Weiterbildend kann die topologische Graphenstruktur mit der Graphenstruktur ergänzt werden.

Desweiteren kann die topologische Graphenstruktur unter Verwendung einer geometrischen Karte der Fläche, insbesondere einer lokalen geometrischen Gitterkarte, und/oder unter Verwendung von Entfernungsinformation generierenden Sensormessungen, insbesondere Lasermessungen, Ultraschallmessungen oder Messungen von Videosystemen, ermittelt werden.

Ferner kann die Erfindung und/oder beschriebene Weiterbildungen eingesetzt werden zur Beschreibung einer Gesamtfläche aus mehreren Flächen durch eine Gesamtgraphenstruktur, so bei einer Bildverarbeitung, bei einer Bildcodierung und/oder einer Beschreibung einer geometrischen Karte.

In diesem Fall wird für die mehreren Flächen jeweils die Graphenstruktur ermittelt. Anschließend werden die Graphenstrukturen zu der Gesamtgraphenstruktur zusammengefügt.

Bei einer Weiterbildung im Umfeld einer Lokalisierungsaufgabe wird für eine Teilfläche der Gesamtfläche eine lokale Gitterkarte erstellt. Eine Teilgraphenstruktur der Gesamtgraphenstruktur wird ausgewählt, wobei die Teilgraphenstruktur zumindest einen ausgewählten Punkt und die Ortsinformation des mindestens einen zugehörigen nächstgelegensten Hindernispunktes enthält. Die ausgewählte Teilgraphenstruktur wird mit der lokalen Gitterkarte verglichen, beispielweise durch Überlagerung oder durch Korrelierung, wobei der nächstgelegenste Hindernispunkte der Teilgraphenstruktur reproduziert wird. Weiter wird dann der reproduzierte, überlagerte nächstgelegenste Hindernispunkt mit einem Hindernispunkt der lokalen Gitterkarte verglichen.

Obigen Ansatz weiterführend können mehrere Teilgraphenstrukturen der Gesamtstruktur ausgewählt werden, deren jede mit der lokalen Gitterkarte überlagert wird. In Abhängigkeit des jeweiligen Vergleichs wird die lokale Gitterkarte einer von den ausgewählten Teilgraphenstrukturen zugeordnet. Daraus lassen sich dann Rückschlüsse auf eine Position bzw. für die Lokalisierung gewinnen, beispielsweise derart, dass die der lokalen Gitterkarte zugeordnete Teilgraphenstruktur eine zu lokalisierende Position beschreibt.

Desweiteren kann die Erfindung und/oder beschriebene Weiterbildungen eingesetzt werden zu einer Lokalisierung und/oder Navigation einer mobilen Einheit. IN diesem Fall wird die mobile Einheit wie beschrieben unter Verwendung der Graphenstruktur lokalisiert und/oder unter Verwendung der Graphenstruktur navigiert.

Die topologische Graphenstruktur kann ferner unter Verwendung einer geometrischen Karte der Fläche, insbesondere einer lokalen geometrischen Gitterkarte, und/oder unter Verwendung von Entfernungsinformation generierenden Sensormessungen, insbesondere Laser-/Ultraschallmessungen oder Messungen von Videosystemen, ermittelt werden.

Die Erfindung läßt sich auch zum Aufbau großer, globaler Flächenbeschreibungen, d.h. entsprechend strukturierter Karten, einsetzen.

In diesem Fall wird für mehrere Flächen einer Gesamtfläche jeweils die zugehörige Graphenstruktur ermittelt. Anschließend werden die Graphenstrukturen der Flächen zu einer Gesamtgraphenstruktur, der strukturieren Karte, zusammengefügt bzw. verschmolzen.

Weiterführend kann nun diese strukturierte Karte der Gesamtfläche bzw. die Gesamtgraphenstruktur auch zu einer Lokalisierung, beispielsweise einer mobilen Einheit, welche sich in einem Teil der Gesamtfläche bewegt bzw. aufhält, eingesetzt werden.

Dazu wird für diesen Teil bzw. diese Teilfläche die zugehörige Graphenstruktur erfindungsgemäß ermittelt. Anschließend wird die Graphenstruktur der Teilfläche mit der Gesamtgraphenstruktur verglichen und dabei die der Graphenstruktur der Teilfläche entsprechende Teilgraphenstruktur in der Gesamtgraphenstruktur bestimmt. Anhand der Teilgraphenstruktur bzw. deren Lage in der Gesamtgraphenstruktur kann die mobile Einheit lokalisiert werden.

Zur Durchführung des Vergleichs stehen verschiedenen Verfahren basierend auf bekannten Methoden zur Verfügung, wie beispielsweise ein hierarchischen Ausschlussverfahren und/oder ein statistisches Matchingverfahren und/oder ein "Constraint Propagation"-Verfahrens. Eine Sicherheit beim Vergleich kann gegebenenfalls erhöht werden, wenn die genannten Verfahren miteinander kombiniert angewandt werden.

In Weiterbildungen kann die Erfindung insbesondere eingesetzt werden bei mobilen Einheiten, wie mobile Roboter. Dabei können unter Verwendung der erfindungsgemäßen Vorgehensweise Aufgaben bei mobilen Einheiten, wie Lokalisierungs-, Orientierungs- und/oder Bahnplanungsaufgaben gelöst werden.

In solchen Fällen wird die mobile Einheit unter Verwendung der erfindungsgemäßen Graphenstruktur lokalisiert und/oder unter Verwendung dieser navigiert.

In Figuren ist ein Ausführungsbeispiel der Erfindung dargestellt, welches im weiteren näher erläutert wird.

Es zeigen
- Figur 1: Skizze einer lokalen geometrischen Gitterkarte;
- Figur 2: Skizze eines lokalen mit Abstandsinformation anno-tierten Teilgraphen einer Teilfläche bzw. einer mit Abstandsinformation annotierten medial axis einer Teilfläche;
- Figur 3: Skizze eines globalen mit Abstandsinformation annotierten Gesamtgraphen einer Gesamtfläche (farbcodiert) bzw. einer mit Abstandsinformation annotierten medial axis einer Gesamtfläche (farbcodiert);
- Figur 4: Skizze eines globalen mit Abstandsinformation annotierten Gesamtgraphen einer Gesamtfläche mit aus der Abstandsinformation rekonstruierten Hindernissen bzw. Begrenzungslinien einer Freifläche;
- Figur 5: Skizze einer von einem mobilen Roboter zu bearbeitenden Gesamtfläche mit Hindernissen (Umgebung) mit dem mobilen Roboter an einer aktuellen Position;
- Figur 6: Skizze eines lokalen mit Abstandsinformation annotierten Teilgraphen derjenigen Teilfläche, in welcher sich der mobile Roboter aus Figur 5 aktuell aufhält;
- Figur 7: Skizze eines globalen mit Abstandsinformation annotierten Gesamtgraphen der Gesamtfläche aus Figur 5, mit farbcodierten Positionswahrscheinlichkeiten des mobilen Roboters an Knoten des Gesamtgraphen (Lokalisierung);
- Figur 8: Skizze von Verfahrensschritten bei der Lokalisierung eines mobilen Roboters gemäß einem Ausführungsbeispiel;
- Figuren 9a bis c: Skizze einer von einem mobilen Roboter zu bearbeitenden Gesamtfläche mit Hindernissen (Umgebung) mit dem mobilen Roboter an einer aktuellen Position (Fig. 9a), Skizze der zugehörigen medial axis der Gesamtfläche (Fig. 9b) sowie Skizze der auf ausgewählte Punkte reduzierten medial axis der Gesamtfläche (Fig. 9c);
- Figuren 10a und b: Skizze einer auf ausgewählte Punkte reduzierten medial axis mit zugehörigen Generatoren (Generatorgraph);
- Figur 11a bis d: Skizzen, welche den Einsatz eines Generatorgraphen bei einer Lokalisierung eines mobilen Roboters beschreiben.

### Ausführungsbeispiel: Lokalisierung eines mobilen Roboters in einer Gesamtfläche mittels eines unter Verwendung eines topologischen Graphen gebildeten Generatorgraphen

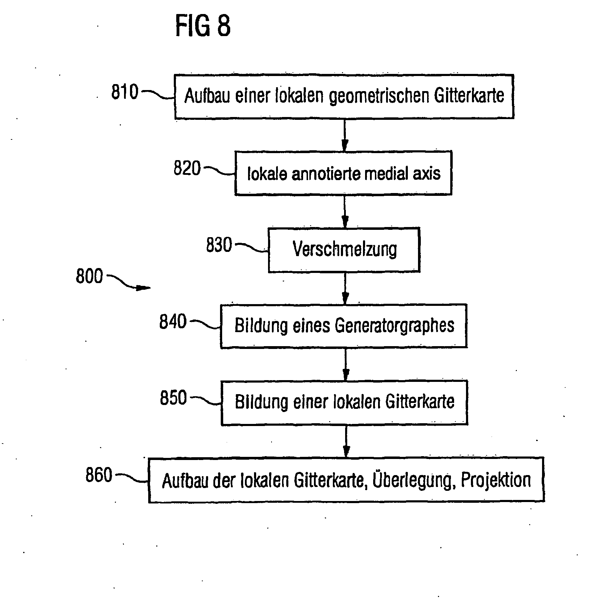

In Fig.8 sind Verfahrensschritte 810 bis 860 (Fig.8, 800) bei einer Lokalisierung eines autonomen, mobilen Roboters in einer Gesamtfläche mittels eines unter Verwendung eines topologischen Graphen gebildeten Generatorgraphen dargestellt.

Der mobile Roboter, im Ausführungsfall ein Reinigungsroboter, ist ausgestattet unter anderem mit einer Reinigungsvorrichtung, mehreren Laserscannern, Sensoren zur Messung von Abständen und Entfernungen sowie einer Rechen- bzw. Auswerteeinheit.

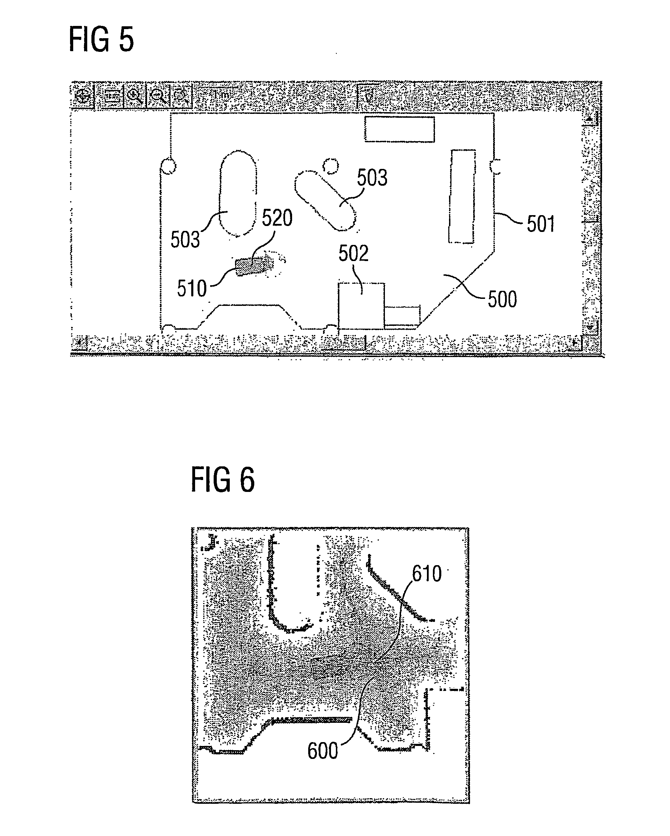

Die Gesamtfläche 500 (vgl. Fig.5), im Ausführungsfall eine zu reinigende Fläche, wird allseitig begrenzt durch Wände 501 und an den Wänden 501 aufgestellten Hindernisse 502, wie Schränke und Regale. Auch sind in der Gesamtfläche 500 weitere verschiedene Hindernisse 503 aufgestellt, welche bei der Reinigung durch den mobilen Roboter zu beachten sind.

Für einen autonomen Betrieb des Roboters nehmen dessen Laserscanner ständig Bilder einer Umgebung des Roboters auf und führen die aufgenommenen Bilder der Recheneinheit des Roboters zu. Dort erfolgt eine Speicherung und eine weitere Auswertung der Bilder.

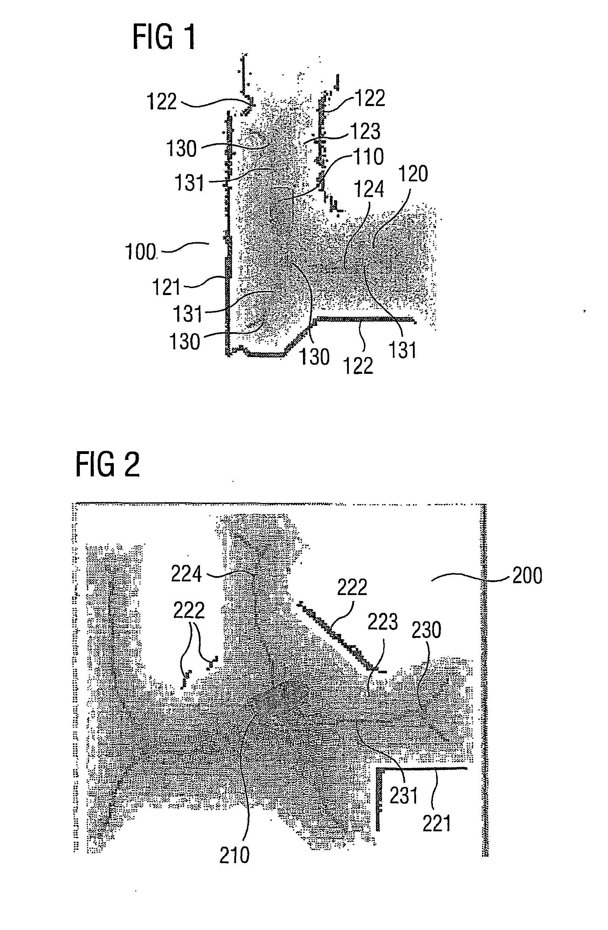

Die weitere Auswertung der Bilder umfasst auch das nachfolgend beschriebene Lokalisierungsverfahren 800 gemäß Fig.8 mit den Verfahrensschritten 810 bis 860 zusammen mit den Figuren 1 bis 7 sowie 9 bis 11.

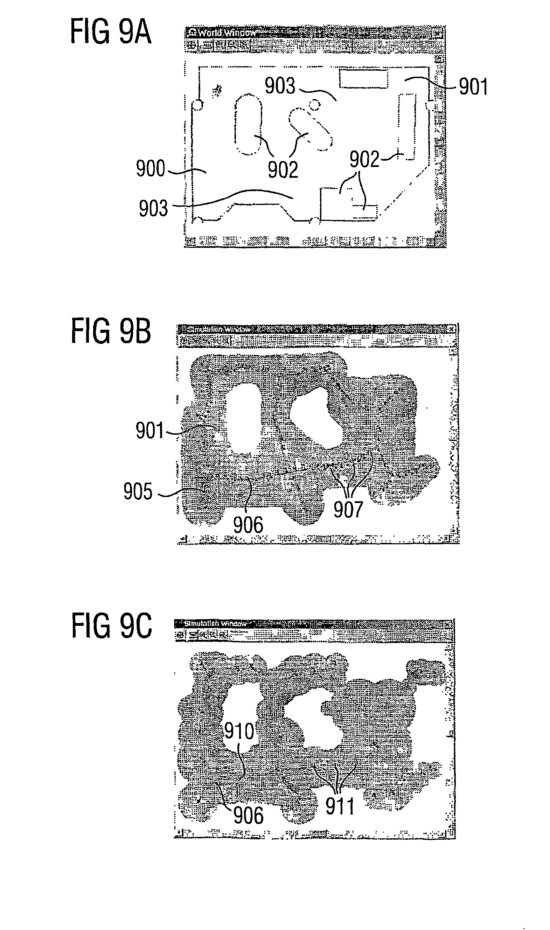

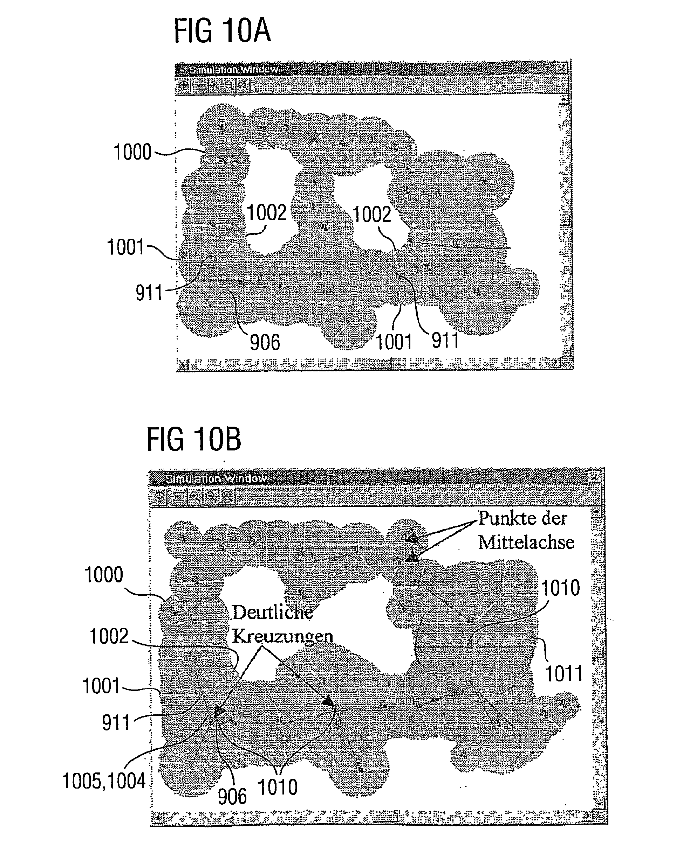

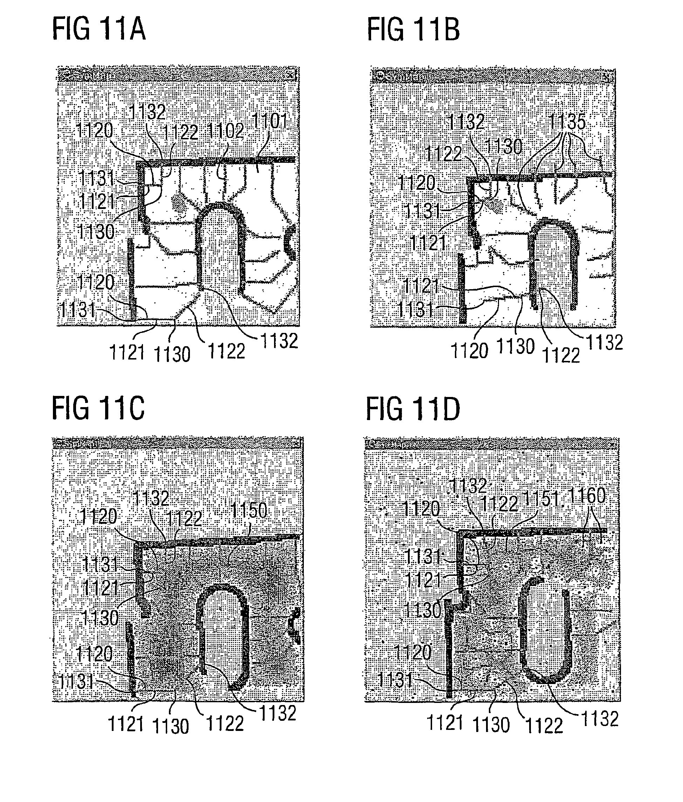

Fig. 8 zeigt:
Verfahrensschritt 1): Ständiger Aufbau einer lokalen geometrischen Gitterkarte einer Umgebung (810; Fig.1),
Verfahrensschritt 2): Aufbau eines lokalen, um Abstandsinformation angereicherten Graphen (lokale, annotierte medial a-xis; 820),
Verfahrensschritt 3) Verschmelzung lokaler annotierter Graphen in eine globale, annotierte Graphenstruktur (830),
Verfahrensschritt 4) Bildung eines Generatorgraphen aus der globalen, annotierten Graphenstruktur durch ergänzende Verweise auf Generatoren (840; Figuren 9a-c, 10a und b),
Verfahrensschritt 5) Bildung einer lokalen Gitterkarte (Pixelkarte; 850),
Verfahrenschritt 6) Auffinden des zu der lokalen Gitterkarte zugehörigen Teils des Generatorgraphen (Lokalisierung; 860; Fig. 11a-d).

### Verfahrensschritt 1): Ständiger Aufbau einer lokalen geometrischen Gitterkarte einer Umgebung (810; Fig. 1)

Fig.1 zeigt eine lokale geometrische Gitterkarte 100 der lokalen, d.h. näheren, Umgebung des mobilen Roboters 110 und somit einen lokalen Ausschnitt aus der Gesamtfläche. Eine solche lokale geometrische Gitterkarte 100 wird ständig während einer Fahrt des mobilen Roboters 110 erstellt bzw. aufgebaut und gespeichert.

Dazu "scannt" der mobile Roboter 100 während seiner Fahrt mittels seiner Laserscanner ständig die Umgebung, erzeugt dadurch Umgebungsbilder und erstellt daraus die lokalen, geometrischen Gitterkarten.

Gleichzeitig werden mittels der Sensoren Abstände und Entfernungen zu den Wänden 121 und Hindernissen 122 ermittelt und diese in die lokalen geometrischen Gitterkarten 100 integriert (Abstandskarte, vgl. Verfahrensschritt 6)).

Entsprechende Verfahren zur Erstellung bzw. zum Aufbau solcher lokalen, geometrischen Gitterkarten sind in [11], [12], [13] beschrieben.

Die in Fig. 1 dargestellte lokale geometrische Gitterkarte 100 zeigt in diesem Fall einen Gang 120, der begrenzt wird durch die Wände 121 und die Hindernisse 122. Nicht von Hindernissen versperrte Flächen werden auch als Freiflächen bezeichnet.

### Verfahrensschritt 2): Aufbau eines lokalen, um Abstandsinformation angereicherten Graphen (lokale, annotierte medial a-xis, Fig.1 und Fig.2)

Ausgehend von einer solchen lokalen geometrischen Gitterkarte 100, 200 sowie unter Verwendung der entsprechenden Abstandsinformation zu den Wänden 121, 221 und den Hindernissen 122, 222 wird eine mit der Abstandsinformation annotierte "medial axis" 124, 214 in der Freifläche 123, 223 bestimmt.

Zuerst wird dabei eine nicht annotierte "medial axis" ermittelt. Entsprechende Verfahren zur Ermittlung einer nicht annotierten "medial axis" sind in [1], [8] beschrieben. Die erzeugte, nicht annotierte "medial axis" weist dabei eine Abfolge von Knoten 130, 230 und Kanten 131, 231 auf.

Diesen, d.h. sowohl den Kanten 131, 231 als auch den Knoten 130, 231, wird anschließend die jeweilige zugehörige Abstandsinformation zugewiesen (annotiert).

Die Zuweisung erfolgt derart, dass jedem Knoten 130, 230 und jeder Kante 131, 231 die Entfernung bzw. der Abstand zum nächst entferntesten Objekt, d.h. zum nächst entferntesten Hindernis 122, 222 bzw. zur nächst entferntesten Wand 121, 221 zugeordnet wird. Dadurch wird die zunächst nicht annotierte "medial axis" annotiert und damit um die Anstandsinformation angereichert.

Zugeordnet werden numerische Abstandswerte bzw. Entfernungen, wobei zur Veranschaulichung der annotierten "medial axis" diese entsprechend der jeweiligen zugeordneten Abstandswerte in der lokalen geometrischen Gitterkarte 100, 200 farbcodiert dargestellt wird.

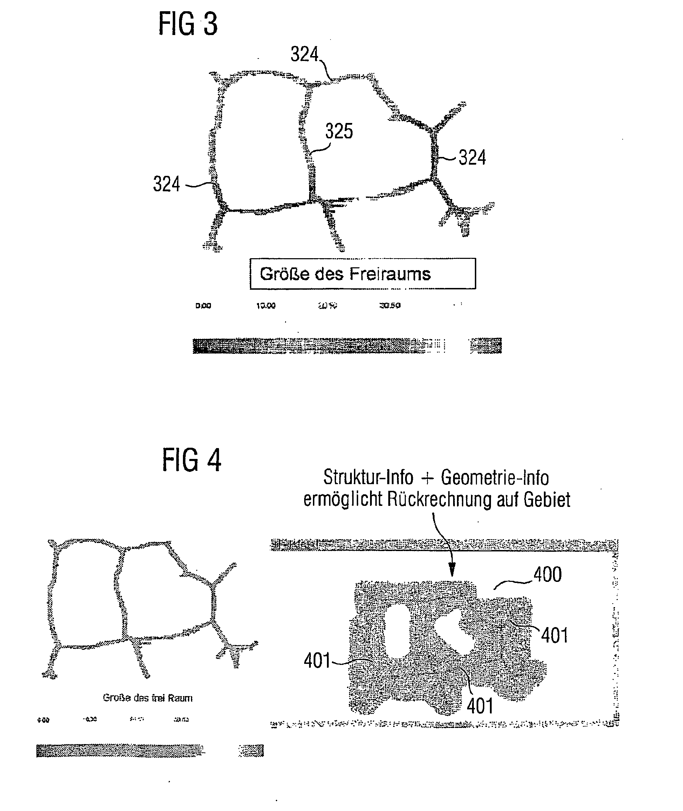

### Verfahrensschritt 3): Verschmelzung lokaler annotierter Graphen in eine globale, annotierte Graphenstruktur (Fig.3 und Fig.4)

Während einer Fahrt des mobilen Roboters 110, 210 werden nun die ermittelten lokalen annotieren Graphen bzw. "medial axis" 224, 324 zu einem globalen annotierten Umgebungsgraphen 325, 400 (globale annotierte Graphenstruktur) fusioniert bzw. verschmolzen.

Dazu werden neue Teile eines lokalen, annotierten Graphen 324, 401 an den globalen, annotierten Umgebungsgraphen 325, 400 angefügt und/oder Teile des globalen, annotierten Umgebungsgraphen 325, 400 durch Teile eines lokalen, annotierten Graphen 324, 401 ersetzt.

Zur Anfügung neuer Graphenteile bzw. zur Ersetzung von Graphenteilen ist jeweils zu entscheiden, welche Graphenteile neu sind. Dies erfolgt durch sogenanntes "Matching" zweier lokaler, annotierter Graphen und/oder "Matching" eines lokalen, annotierten Graphen mit dem globalen, annotierten Umgebungsgraphen jeweils unter Berücksichtigung der Bewegung des mobilen Roboters.

Ausgegangen wird zu Beginn der Verschmelzung von einem schon zum Teil bestehenden und gespeicherten globalen, annotierten Umgebungsgraphen oder - falls ein solcher noch nicht existiert - von einem lokalen, annotierten Graphen, welcher zu dem globalen, annotierten Umgebungsgraphen aus- bzw. aufgebaut wird.

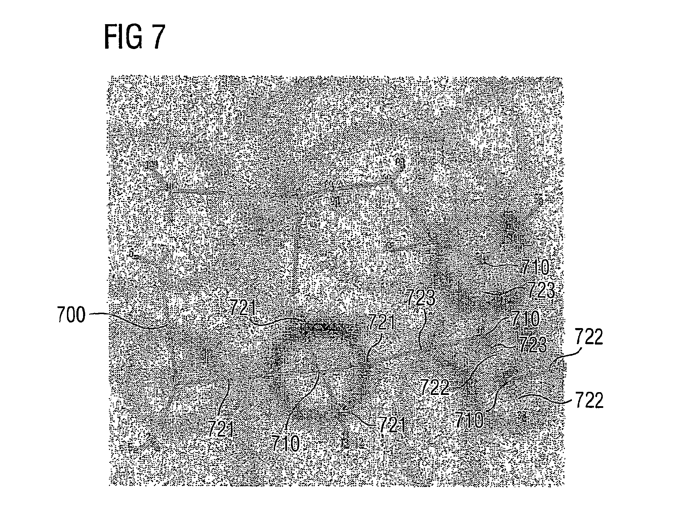

Am Ende der Verschmelzung steht ein vollständig aufgebauter globaler, annotierter Umgebungsgraphen der Gesamtfläche. Figuren 6 und 7 zeigen weitere Skizzen der Verwendung von annotierten Umgebungsgraphen.

### Verfahrensschritt 4) Bildung eines Generatorgraphen aus der globalen, annotierten Graphenstruktur bzw. dem Umgebungsgraphen durch ergänzende Verweise auf Generatoren (840; Figuren 9a-c, 10a und b)

Fig.9a zeigt eine geometrische Gitterkarte 900 der Umgebung 901 des mobilen Roboters 110 und somit die vom Roboter 110 zu bearbeitende Gesamtfläche 901.

In der Gesamtfläche 901 sind Hindernisse 902 sowie Freiflächen 903 sichtbar.

Fig.9b zeigt den globalen, annotierten Umgebungsgraphen 905 dieser Gesamtfläche 901. Der Verlauf der medial axis 906 ist durch eine Vielzahl von medial axis-Punkten 907 verdeutlicht.

Fig.9c zeigt einen aus dem globalen, annotierten Umgebungsgraphen 905 gewonnenen "reduzierten" Umgebungsgraphen 910.

Bei diesem reduzierten Umgebungsgraphen 910 wurden aus der Vielzahl von medial axis-Punkten 907 verschiedene Punkte ausgewählt, welche ausgewählten medial axis-Punkte 911 ebenfalls den Verlauf der medial axis 906 skizzieren.

Anhand des reduzierten Umgebungsgraphen 910 wird der in den Figuren 10a und b dargestellte Generatorgraph 1000 erzeugt.

Dazu werden für jeden ausgewählten medial axis-Punkt 911 die beiden nächsten Randpixel 1001 bzw. 1002 ermittelt. Da diese Randpixel 1001, 1002 die medial axis 906 aufspannen werden sie auch als Generatoren bezeichnet.

Die Generatoren 1001, 1002 werden zusammen mit den ausgewählten medial axis-Punkten 911 in dem Generatorgraph 1000 gespeichert (Fig.10a).

Darüber hinaus gibt es Punkte 1005 auf der medial axis 906, die mehr als zwei Generatoren 1001, 1002 haben (Fig. 10b). Diese Punkte 1005 sind die Kreuzungen 1004. Kreuzungen 1004 sind bei der Lokalisierung von Interesse, weil sie an einer kanonischen Position liegen. Deshalb können sie als Landmarke benützt werden.

Die Kreuzungen 1004 bzw. diese Punkte 1005 werden auch in dem Generatorgraphen gespeichert, weil sie für die Lokalisierung hilfreich sind.

Ferner werden zusätzlich die Mittelpunkt bzw, medial axis-Punkte 1010 der Kreise 1011 gespeichert, welche einen maximalen Abstand zum Rand haben. Die Konfiguration dieser Punkte 1010, sowie die Breite der Freifläche an der Stelle sind Informationen, die die Signatur einer Kreuzung bestimmen können.

### Verfahrensschritt 5) Bildung einer lokalen Gitterkarte (Pixelkarte, vgl. Fig.11 1102; 850)

Fig.5 zeigt den mobilen Roboter 510 an einer für ihn nicht bekannten Position 520 in der Gesamtfläche 500.

An dieser nicht bekannten Position 520 erstellt der mobile Roboter 510 nach bekannter und oben beschriebener Vorgehensweise (vgl. Verfahrensschritt 1)) eine lokale geometrische Gitterkarte 1102.

Dazu "scannt" der mobile Roboter 100 an der ihm unbekannten Position die Umgebung, erzeugt dadurch ein Umgebungsbild und erstellt daraus die lokale, geometrische Gitterkarte (Pixelkarte, 1102).

Gegebenenfalls kann diese Pixelkarte 1102 weiter zu einer Abstandskarte erweitert werden (vgl. Verfahrensschritt 1)).

### Verfahrenschritt 6) Auffinden des zu der lokalen (geometrischen) Gitterkarte zugehörigen Teils des Generatorgraphen (Positionsbestimmung und Lokalisierung; 860; Fig.11a-d)

Aufgabe bei der Lokalisierung bzw. Positionsbestimmung ist nun, denjenigen Teilgraphen des Generatorgraphen zu ermitteln, welcher die lokale geometrische Gitterkarte - ermittelt an der unbekannten Position (vgl. Verfahrensschritt 5)) - beschreibt. Dies erfolgt durch Vergleich bzw. Überlagerung bzw. Projektion eines vermuteten Teilgeneratorgraphen 1101 mit der Pixelkarte 1102.

Bei der Lokalisierung wird nun nicht auf Ebene der topologischen Graphenstruktur bzw. auf der Ebene der medial axis verglichen, sondern ein oder zwei Ebenen tiefer, das heißt auf Ebene der Abstandskarte (vgl. Verfahrensschritt 1)) oder sogar auf Ebene der Pixelkarte 1102.

Die Abstandskarte entsteht wie im Vorigen beschrieben (vgl. Verfahrensschritt 1)) als Zwischenschritt bei der Generierung der medial axis. Sie enthält den Abstand eines Pixels zum nächsten Hindernis bzw. zur nächsten Hinderniskante.

Im Idealfall sollte dieser Abstand für alle projizierten Pixel während der Lokalisierung Null sein, zumindest sehr klein, auch bei beliebigen zusätzlichen Hindernissen.

Fig. 11a zeigt eine Überlagerung bzw. Projektion eines vermuteten Teilgeneratorgraphen 1101 mit der Pixelkarte 1102 bei einer korrekten Vermutung bzw. Positionsannahme. Fig. 11b zeigt die Überlagerung bei einer falschen Vermutung bzw. Positionsannahme.

Jeder Linienzug 1120 in Fig. 11a bis d besteht aus genau zwei gleich langen Strecken 1121 bzw. 1122, ausgehend von einem Mittelachsen-Punkt 1130 (Mittelachsen nicht dargestellt) hin zu den beiden Generatoren 1131 bzw. 1132 dieses Punktes 1130.

Ist die Positionsannahme korrekt enden diese Strecken 1121, 1122 immer auf oder nahe Hinderniskanten (Fig.11a) bzw. kommen die Generatoren 1131, 1132 auf Hinderniskanten zu liegen.

Ist die Positionsannahme falsch so ergeben sich Abstände 1135 zwischen den Generatoren 1131, 1132 und den Hinderniskanten. Diese Abstände 1135 können als Maß (Gesamtabstandsmaß) für die Qualität der Vermutung bzw. als Maß für die Übereinstimmung der Überlagerung verwendet werden.

Die Robustheit des Generatorgraphen 1101 gegenüber Umgebungsdynamik verdeutlichen die Figuren 11c und d.

Die Figuren 11c und d zeigen die Veränderung der medial axis 1150 bzw. 1151 bei einer Umgebungsdynamik, in diesem Fall durch Punkte 1160 simulierte Personen.

Die Figuren 11c und d zeigen eine deutliche Veränderung der Mittelachse 1150 bzw. 1151 bei den zusätzlichen durch die Umgebungsdynamik hervorgerufenen Hindernissen, in diesem Fall den Personen 1160. Ein Vergleich auf Ebene der medial axis wird dadurch schwer möglich.

Bei dem Vergleich auf Ebene des Generatorgraphen 1101 bzw. der Generatoren 1131, 1132 ändert sich bei Umgebungsdynamik nicht viel.

Eine Wahrscheinlichkeit, dass bei einer falschen Positionsvermutung ein Generator 1131, 1132 auf eine durch die Umgebungsdynamik hervorgerufene Hinderniskante fällt, ist gering.

In diesem Dokument sind folgende Schriften zitiert:
[1] Philip N. Klein et al., Shape matching using editdistance: an implementation", Twelfth Annual ACM-SIAM Symposium on Discrete Algorithms, SODA 2001, Dept. of Computer Science, Brown Universitiy, Providence.
[2] C. Hofner and G. Schmidt, Path Planning And Guidance Techniques For An Autonomous Mobile Cleaning Robot, International Conference on Intelligent Robots and Systems (IROS), pp. 610-617, 1994.
[3] R. Neumann de Carvalho, H.A. Vidal, P. Vieira, and M.I. Ribeiro, Complete Coverage Path Planning and Guidance for Cleaning Robots, IEEE International Symposium on Industrial Electronics, pp. 677-682, 1997.
[4] H. Choset and P. Pignon, Coverage Path Planning: The Boustrophedon Cellulär Decomposition, International Conference on Field and Service Robotics, 1997.
[5] A. Zelinsky, R. A. Jarvis, J. C. Byarne and S. Yuta, Planning Paths of Complete Coverage of an Unstructered Environment by a Mobile Robot, International Conference on Robotica and Automation (ICRA), pp. 533-538, 1993.
[6] E. Prassler, D. Schwammkrug, B. Rohrmoser, and G. Schmidl, Autonomous Road Sweeping of Large Public Areas, Robotik 2000, VDI Berichte 1552, VDI Verlag GmbH, Düsseldorf, 2000.
[7] E. Prassler, D. Schwammkrug, B. Rohrmoser, and G. Schmidl, A Robotic Road Sweeper, International Conference on Robotica and Automation (ICRA), pp. 2364-2369, 2000.
[8] Howie Choset et al., "Topological Simultaneous Localzation and Mapping (SLAM): Toward Exact Localization Without Explicit Localisation", pp 125-137, IEEE Transactions on Robotics and Automation, Vol. 17, No. 2, April 2001.
[9] D. Van Zwynsvoorde et al., "Incremental Topological Modelling using Local Voronoi-like Graphs", Paper Submitted to IEEE Int. Conf. On Intelligent Robots and Systems, 2000.
[10] D. Van Zwynsvoorde et al., "Building topological models for navigation in large scale environments", LAAS-CNRS, Toulouse, France, 2001.
[11] Sebastian Thrun, "Robotic Mapping: a Survey", February 2002 CMU-CS-02-11, in G. Lakemeyer, B. Nebel (eds.), "Exploring AI in the New Millenium", Kapitel 1, Morgan Kaufmann, San Francisco und erhältlich unter: http://www2.cs.cmu.edu/afs/cs.cmu.edu/user/thrun/public_html/ papers/thrun.mapping-tr.html
[12] A. Elfes, "Occupancy Grids: A Probabilistic Framework for Robot Perception and Navigation", Department of Electrical and Computer Engineering, Carnegie Mellon University 1989
[13] H.P Moravec, "Sensor Fusion in certainty grids for mobile robots", AI Magazine, 9(2):61-74, 1988
[14] NAGATANI K ET AL: "Sensor based navigation for car-like mobile robots using generalized Voronoi graph" PROCEEDINGS OF THE 2001 IEEE/RSJ INTERNATIONAL CONFERENCE ON INTELLIGENT ROBOTS AND SYSTEMS. (IROS 2001). MAUI, HAWAII, OCT. 29 - NOV. 3, 2001, IEEE/RSJ INTERNATIONAL CONFERENCE ON INTELLIGENT ROBOTS AND SYSTEMS, NEW YORK, NY: IEEE, US, Bd. 1 OF 4, 29. October 2001 (2001-10-29), pp 1017-1022, XP010571830 ISBN: 0-7803-6612-3
[15] JENNINGS J ET AL: "Distributed map-making and navigation in dynamic environments" INTELLIGENT ROBOTS AND SYSTEMS, 1998. PROCEEDINGS., 1998 IEEE/RSJ INTERNATIONAL CONFERENCE ON VICTORIA, BC, CANADA 13-17 OCT. 1998, NEW YORK, NY, USA, IEEE, US, 13. October 1998 (1998-10-13), pp 1695-1701, XP010311424 ISBN: 0-7803-4465-0
[16] BOADA B L ET AL: "Localization and modelling approach using topo-geometric maps" PROCEEDINGS OF THE 2002 IEEE/RSJ INTERNATIONAL CONFERENCE ON INTELLIGENT ROBOTS AND SYSTEMS. (IROS 2002). LAUSANNE, SWITZERLAND, SEPT. 30 - OCT. 4, 2002, IEEE/RSJ INTERNATIONAL CONFERENCE ON INTELLIGENT ROBOTS AND SYSTEMS, NEW YORK, NY: IEEE, US, Vol. 1 OF 3, 30. September 2002 (2002-09-30), pp 484-489, XP010609298 ISBN: 0-7803-7398-7
[17] VICTORINO A C ET AL: "Mobile robot navigation using a sensor-based control strategy" PROCEEDINGS OF THE 2001 IEEE INTERNATIONAL CONFERENCE ON ROBOTICS AND AUTOMATION. ICRA 2001. SEOUL, KOREA, MAY 21 - 26, 2001, PROCEEDINGS OF THE IEEE INTERNATIONAL CONFERENCE ON ROBOTICS AND AUTOMATION, NEW YORK, NY: IEEE, US, Vol. 1 OF 4, 21. May 2001 (2001-05-21), Seiten 2753-2758, XP010550560 ISBN: 0-7803-6576-3
[18] THRUN S ET AL: "Probabilistic mapping of an environment by a mobile robot" ROBOTICS AND AUTOMATION, 1998. PROCEEDINGS. 1998 IEEE INTERNATIONAL CONFERENCE ON LEUVEN, BELGIUM 16-20 MAY 1998, NEW YORK, NY, USA, IEEE, US, 16. May 1998 (1998-05-16), pp 1546-1551, XP010281274 ISBN: 0-7803-4300-X

## Patentansprüche

1. Verfahren zur Bildung einer Graphenstruktur (1000) zur Beschreibung einer Fläche (901) mit einer Freifläche (903) und einer Belegtfläche (902),
- bei dem eine topologische Graphenstruktur (905) für die Freifläche (903) der Fläche (901) ermittelt wird,
- bei dem mindestens ein Punkt (911) der topologischen Graphenstruktur (905) ausgewählt wird,
- bei dem zu dem ausgewählten Punkt (911) der topologischen Graphenstruktur (905) ein nächstgelegener Belegtflächenpunkt (1001, 1002) bestimmt wird, welcher nächstgelegene Belegtflächenpunkt (1001, 1002) auf einer Belegtfläche (902) liegt und einen kürzesten Abstand zu dem ausgewählten Punkt (911) der topologischen Graphenstruktur (905) aufweist,
- bei dem eine Ortsinformation für den nächstgelegenen Belegtflächenpunkt (1001, 1002) ermittelt wird,
- bei dem die Graphenstruktur (1000) zumindest aus dem ausgewählten Punkt (911) der topologischen Graphenstruktur (905) und aus der zugehörigen Ortsinformation des nächstgelegenen Belegtflächenpunktes (1001, 1002) gebildet wird.

2. Verfahren nach Anspruch 1,
bei dem die topologische Graphenstruktur (905) unter Verwendung eines Shock-Graphen, einer "medial axis" (907) oder eines Voronoi-Graphen gebildet wird.

3. Verfahren nach einem der vorangehenden Ansprüche,
bei dem die Ortsinformation des nächstgelegenen Belegtflächenpunktes (1001, 1002) eine relative Ortsinformation bezüglich des ausgewählten Punktes (911), insbesondere eine Abstandsinformation und eine Richtungsinformation, insbesondere eine Winkelangabe, oder eine absolute Ortsinformation, insbesondere Koordinaten des nächstgelegenen Belegtflächenpunktes (1001, 1002), ist.

4. Verfahren nach einem der vorangehenden Ansprüche,
bei dem mehrere Punkte (911) der topologischen Graphenstruktur (905) ausgewählt werden, zu welchen jeweils der nächstgelegene Belegtflächenpunkt (1001, 1002) und die dazu zugehörige Ortsinformation ermittelt werden, und die Graphenstruktur (1000) gebildet wird aus allen ausgewählten Punkten (911) und die zugehörigen Ortsinformationen.

5. Verfahren nach Anspruch 4,
bei dem die ausgewählten Punkte (911) in Abhängigkeit einer Regelmäßigkeit der topologischen Graphenstruktur (905) ausgewählt werden.

6. Verfahren nach einem der vorangehenden Ansprüche,
bei dem für den ausgewählten Punkt (911) der topologischen Graphenstruktur (905) mindestens ein weiterer nächstgelegener Belegtflächenpunkt (1001, 1002) ermittelt wird oder weitere nächstgelegene Belegtflächenpunkte (1001, 1002) ermittelt werden, für den bzw. für die jeweils die zugehörige Ortsinformation ermittelt wird bzw. werden.

7. Verfahren nach Anspruch 6,
bei dem ein Knotenpunkt (911) der topologischen Graphenstruktur (905) ausgewählt wird und für den Knotenpunkt (911) mindestens zwei nächstgelegene Belegtflächenpunkte (1001, 1002) und deren zugehörige Ortsinformationen ermittelt werden.

8. Verfahren nach einem der vorangehenden Ansprüche,
bei dem die topologische Graphenstruktur (905) mit der Graphenstruktur (1000) ergänzt wird.

9. Verfahren nach einem der vorangehenden Ansprüche,
bei dem die topologische Graphenstruktur (905) unter Verwendung einer geometrischen Karte (900) der Fläche (901), insbesondere einer lokalen geometrischen Gitterkarte, und/oder unter Verwendung von Entfernungsinformation generierenden Sensormessungen, insbesondere Lasermessungen, Ultraschallmessungen oder Messungen von Videosystemen, ermittelt wird.

10. Verfahren nach einem der vorangehenden Ansprüche, eingesetzt zur Beschreibung einer Gesamtfläche (901) aus mehreren Flächen durch eine Gesamtgraphenstruktur (1000),
- bei dem für die mehreren Flächen jeweils die Graphenstruktur (1101) ermittelt wird,
- bei dem die Graphenstrukturen (1101) zu der Gesamtgraphenstruktur (1000) zusammengefügt werden.

11. Verfahren nach Anspruch 10,
- bei dem für eine Teilfläche der Gesamtfläche (901) eine lokale Gitterkarte (1102) erstellt wird,
- bei dem eine Teilgraphenstruktur (1101) der Gesamtgraphenstruktur (1000) ausgewählt wird, wobei die Teilgraphenstruktur (1101) zumindest einen ausgewählten Punkt (1130) und die Ortsinformation des mindestens einen zugehörigen nächstgelegenen Belegtflächenpunktes (1131, 1132) enthält, bei dem die ausgewählte Teilgraphenstruktur (1101) mit der lokalen Gitterkarte (1102) überlagert wird, wobei der nächstgelegene Belegtflächenpunkt (1131, 1132) der Teilgraphenstruktur (1101) reproduziert wird,
- bei dem der reproduzierte, überlagerte nächstgelegene Belegtflächenpunkt (1131, 1132) mit einem Belegtflächenpunkt der lokalen Gitterkarte (1102) verglichen wird.

12. Verfahren nach Anspruch 11,
- bei dem mehrere Teilgraphenstrukturen (1101) der Gesamtstruktur (1000) ausgewählt werden, deren jede mit der lokalen Gitterkarte (1102) überlagert wird,
- bei dem in Abhängigkeit des jeweiligen Vergleichs die lokale Gitterkarte (1102) einer von den ausgewählten Teilgraphenstrukturen (1101) zugeordnet wird.

13. Verfahren nach Anspruch 12,
eingesetzt zur Lokalisierung, wobei die der lokalen Gitterkarte (1102) zugeordnete Teilgraphenstruktur (1101) eine zu lokalisierende Position beschreibt.

14. Verfahren nach einem der vorangehenden Ansprüche, eingesetzt zu einer Lokalisierung und/oder Navigation einer mobilen Einheit (510),
bei dem die mobile Einheit (510) unter Verwendung der Graphenstruktur (1000) lokalisiert wird und/oder bei dem die mobile Einheit (510) unter Verwendung der Graphenstruktur (1000) navigiert wird.

15. Anordnung zur Bildung einer Graphenstruktur (1000) zur Beschreibung einer Fläche (901) mit einer Freifläche (903) und einer Belegtfläche (902),
- mit einer Strukturermittlungseinheit, mit welcher eine topologische Graphenstruktur (905) für die Freifläche (903) der Fläche (901) ermittelbar ist,
- mit einer Auswahleinheit, mit welcher mindestens ein Punkt (911) der topologischen Graphenstruktur (903) auswählbar ist,
- mit einer Hindernisermittlungseinheit, mit welcher zu dem ausgewählten Punkt (911) der topologischen Graphenstruktur (905) ein nächstgelegener Belegtflächenpunkt (1001, 1002) bestimmbar ist, welcher nächstgelegene Belegtflächenpunkt (1001, 1002) auf einer Belegtfläche (902) liegt und einen kürzesten Abstand zu dem ausgewählten Punkt (911) der topologischen Graphenstruktur (905) aufweist,
- mit einer Ortsbestimmungseinheit, mit welcher eine Ortsinformation für den nächstgelegenen Belegtflächenpunkt (1001, 1002) ermittelbar ist,
- mit einer Strukturbildungseinheit, mit welcher die Graphenstruktur (1000) zumindest aus dem ausgewählten Punkt (911) der topologischen Graphenstruktur (905) und aus der zugehörigen Ortsinformation des nächstgelegenen Belegtflächenpunktes (1001, 1002) bildbar ist.

16. Computerprogramm-Produkt mit auf einem maschinenlesbaren Träger gespeicherten Programmcode-Mitteln, um alle Schritte gemäß einem der Ansprüche 1 bis 14 durchzuführen, wenn das Programm auf einem Computer ausgeführt wird.

## Claims

1. Method for forming a graph structure (1000) for description of an area (901) with a free area (902) and an occupied area (903),
- in which a topological graph structure (905) for the free area (903) of the area (901) is determined,
- in which at least one point (911) of the topological graph structure (905) is selected,
- in which for the selected point (911) of the topological graph structure (905) a nearest adjacent occupied area point (1001, 1002) is determined, which nearest adjacent occupied area point (1001, 1002) lies on an occupied area (902) and features a shortest distance to the selected point (911) of the topological graph structure (905),
- in which location information for the nearest adjacent occupied area point (1001, 1002) is determined,
- in which the graph structure (1000) is formed from at least the selected point (911) of the topological graph structure (905) and from the associated location information of the nearest adjacent occupied area point (1001, 1002).

2. Method according to claim 1,
in which the topological graph structure (905) is formed using a Shock graph, a "medial axis" (907) or a Voronoi graph.

3. Method in accordance with one of the previous claims,
in which the location information of the nearest adjacent occupied area point (1001, 1002) is relative location information as regards the selected point (911), especially displacement information and direction information, especially an angle specification or absolute location information, especially coordinates of the nearest adjacent occupied area point (1001, 1002).

4. Method in accordance with one of the previous claims, in which a number of points (911) of the topological graph structure (905) are selected, for which the nearest adjacent occupied area point (1001, 1002) and the location information associated with it are determined in each case, and the graph structure is formed from all selected points (911) and the associated location information.

5. Method according to claim 4,
in which the selected points (911) are selected depending on a regularity of the topological graph structure (905).

6. Method in accordance with one of the previous claims,
in which for the selected point (911) of the topological graph structure (905) at least one further nearest adjacent occupied area point (1001, 1002) is determined or further nearest adjacent occupied area points (1001, 1002) are determined, for which the associated location information is determined in each case.

7. Method according to claim 6,
in which a node point (911) of the topological graph structure (905) is selected and for the node point (911) at least two nearest adjacent occupied area points (1001, 1002) and their associated location information are determined.

8. Method in accordance with one of the previous claims,
in which the topological graph structure (905) is supplemented with the graph structure (1000).

9. Method in accordance with one of the previous claims,
in which the topological graph structure (905) is determined using a geometrical map (900) of the area (901), especially a local geometrical grid map, and/or using sensor measurements generating distance information, especially laser measurements, ultrasound measurements or measurements of video systems.

10. Method in accordance with one of the previous claims, used for description of an overall area (901) consisting of a number of areas through an overall graph structure (1000),
- in which the graph structure (1101) is determined in each case for the number of areas,
- in which the graph structures (1101) are combined into the overall graph structure (1000).

11. Method according to claim 10,
- in which a local grid map (1102) is created for a part area of the overall area (901),
- in which a subgraph structure (1101) of the overall graph structure (1000) is selected, in which case the subgraph structure (1101) contains at least one selected point (1130) and the location information of the at least one associated nearest adjacent occupied area point (1131, 1132),
- in which the selected subgraph structure is overlaid with the local grid map (1102), in which case the nearest adjacent occupied area point (1131, 1132) of the subgraph structure is reproduced,
- in which the reproduced, overlaid, nearest occupied area point (1131, 1132) is compared to an occupied area point of the local grid map (1102).

12. Method according to claim 11,
- in which a number of subgraph structures (1101) of the overall graph structure (1000) are selected, of which each is overlaid with the local grid map (1102),
- in which depending on the relevant comparison the local grid map (1102) is assigned to one of the selected subgraph structures (1101).

13. Method according to claim 12,
used for localization, in which case the subgraph structure (1101) assigned to the local grid map (1102) describes a position to be localized.

14. Method in accordance with one of the previous claims, used for localization and/or navigation of a mobile unit (510), in which the mobile unit (510) is localized using the graph structure (1000) and/or in which the mobile unit (510) is navigated using the graph structure (1000).

15. Arrangement for forming a graph structure (1000) for description of an area (901) with a free area (903) and an occupied area (902),
- with a structure determination unit with which a topological graph structure (905) for the free area (903) of the area (901) can be determined,
- a selection unit with which at least one point (911) of the topological graph structure (905) can be selected,
- with a unit for identifying obstacles, with which a nearest point in the occupied area (1001, 1002) can be determined for a selected point (911) of the topological graph structure (905), this nearest occupied point (1001, 1002) lying in an occupied area (902) and featuring a shortest distance to the selected point (911) of the topological graph structure (905),
- with a location determination unit with which location information for the nearest adjacent occupied area point (1001, 1002) can be determined,
- with a structure generation unit, with which the graph structure (1000) can be formed from at least the selected point (911) of the topological graph structure (905) and from the associated location information of the nearest adjacent occupied area point (1001, 1002).

16. Computer program product with program code means stored on a machine-readable medium to execute all steps in accordance with claims 1 to 14 when the program is executed on a computer.

## Revendications

1. Procédé pour constituer une structure graphique (1000) destinée à décrire une surface (901) avec une surface libre(903) et une surface occupée (902),
- dans lequel une structure graphique (905) topologique pour la surface libre (903) de la surface (901) est déterminée,
- dans lequel au moins un point (911) de la structure graphique (905) topologique est sélectionné,
- dans lequel, pour le point (911) sélectionné de la structure graphique (905) topologique, on détermine un point de surface occupée (1001, 1002) le plus proche possible, lequel point de surface occupée (1001, 1002) le plus proche possible est situé sur une surface occupée (902) et présente un espacement le plus court possible au point (911) sélectionné de la structure graphique (905) topologique,
- dans lequel une information locale pour le point de surface occupée (1001, 1002) le plus proche possible est déterminée,
- dans lequel la structure graphique (1000) est formée au moins du point (911) sélectionné de la structure graphique (905) topologique et de l'information locale correspondante du point de surface occupée (1001, 1002) le plus proche.

2. Procédé selon la revendication 1,
- dans lequel la structure graphique (905) topologique est formée en utilisant un graphe de Shock, un "medial axis" (907) ou un graphe de Voronoi.

3. Procédé selon l'une quelconque des revendications précédentes,
- dans lequel l'information locale du point de surface occupée (1001, 1002) le plus proche est une information locale relative concernant le point (911) sélectionné, en particulier une information d'espacement et une information de direction, en particulier une indication d'angle, ou une information locale absolue, en particulier des coordonnées du point de surface occupée (1001, 1002) le plus proche.

4. Procédé selon l'une quelconque des revendications précédentes,
dans lequel plusieurs points (911) de la structure graphique (905) topologique sont sélectionnés, pour lesquels à chaque fois le point de surface occupée (1001, 1002) le plus proche et l'information locale correspondante sont déterminés, et la structure graphique (1000) est formée de tous les points (911) sélectionnés et les informations locales correspondantes.

5. Procédé selon la revendication 4,
dans lequel les points (911) sélectionnés sont sélectionnés en fonction d'une régularité de la structure graphique (905) topologique.

6. Procédé selon l'une quelconque des revendications précédentes,
dans lequel, pour le point (911) sélectionné de la structure graphique (905) topologique, on détermine au moins un autre point de surface occupée (1001, 1002) le plus proche ou bien on détermine d'autres points de surface occupée (1001, 1002) situés les plus près, pour lequel resp. pour lesquels à chaque fois l'information locale correspondante est resp. sont déterminées.

7. Procédé selon la revendication 6,
dans lequel un point nodal (911) de la structure graphique (905) topologique est sélectionné et, pour le point nodal (911), au moins deux points de surface occupée (1001, 1002) situés les plus près et leurs informations locales correspondantes sont déterminées.

8. Procédé selon l'une quelconque des revendications précédentes,
dans lequel la structure graphique (905) topologique est complétée avec la structure graphique (1000).

9. Procédé selon l'une quelconque des revendications précédentes,
dans lequel la structure graphique (905) topologique est déterminée en utilisant une carte (900) géométrique de la surface (901), en particulier une carte à quadrillage géométrique locale, et/ou en utilisant des mesures de capteur générant de l'information de distance, en particulier des mesures au laser, des mesures par ultrasons ou des mesures de systèmes vidéo.

10. Procédé selon l'une quelconque des revendications précédentes,
utilisé pour décrire une surface globale (901) à partir de plusieurs surfaces par une structure graphique globale (1000),
- dans lequel à chaque fois la structure graphique (1101) est déterminée pour les plusieurs surfaces,
- dans lequel les structures graphiques (1101) sont assemblées pour former la structure graphique globale (1000).

11. Procédé selon la revendication 10,
- dans lequel une carte à quadrillage (1102) locale est établie pour une surface partielle de la surface globale (901),
- dans lequel une structure graphique partielle (1101) de la structure graphique globale (1000) est sélectionnée, la structure graphique partielle (1101) contenant au moins un point (1130) sélectionné et l'information locale du au moins un point de surface occupée (1131, 1132) correspondante situé le plus près,
- dans lequel la structure graphique partielle (1101) sélectionnée est superposée avec la carte à quadrillage (1102) locale, le point de surface occupée (1131, 1132) le plus proche de la structure graphique partielle (1101) étant reproduit,
- dans lequel le point de surface occupée (1131, 1132) reproduit, superposé et le plus proche est comparé avec un point de surface occupée de la carte à quadrillage (1102) locale.

12. Procédé selon la revendication 11,
- dans lequel plusieurs structures graphiques partielles (1101) de la structure globale (1000) sont sélectionnées, dont chacune est superposée avec la carte à quadrillage (1102) locale,
- dans lequel en fonction de la comparaison respective, la carte à quadrillage (1102) locale est attribuée à l'une des structures graphiques partielles (1101) sélectionnées.

13. Procédé selon la revendication 12,
utilisé pour la localisation, la structure graphique partielle (1101) attribuée à la carte à quadrillage (1102) locale décrivant une position à localiser.

14. Procédé selon l'une quelconque des revendications précédentes,
utilisé pour une localisation et/ou une navigation d'une unité (510) mobile,
dans lequel l'unité (510) mobile est localisée en utilisant la structure graphique (1000) et/ou dans lequel on navigue avec l'unité mobile (510) en utilisant la structure graphique (1000).

15. Dispositif pour former une structure graphique (1000) pour décrire une surface (901) avec une surface libre (903) et une surface occupée (902),
- comprenant une unité de détermination de structure, avec laquelle une structure graphique (905) topologique pour la surface libre (903) de la surface (901) peut être déterminée,
- une unité de sélection, avec laquelle au moins un point (911) de la structure graphique (903) topologique peut être choisie,
- une unité de détermination d'obstacle, avec laquelle pour le point (911) sélectionné de la structure graphique (905) topologique, on peut déterminer un point de surface occupée le plus proche (1001, 1002), lequel point de surface occupée (1001, 1002) le plus proche est situé sur une surface occupée (902) et présente un espacement le plus court au point (911) sélectionné de la structure graphique (905) topologique,
- une unité de localisation, avec laquelle une information locale pour le point de surface occupée (1001, 1002) le plus proche peut être déterminée,
- une unité de formation de structure, avec laquelle la structure graphique (1000) peut être formée au moins à partir du point (911) sélectionné de la structure graphique (905) topologique et à partir de l'information locale correspondant du point de surface occupée (1001, 1002) le plus proche.

16. Produit de programme informatique comprenant des moyens de codage de programme stockés sur un support pouvant être lu à la machine, afin d'effectuer toutes les étapes selon l'une quelconque des revendications 1 à 14, lorsque le programme est appliqué sur un ordinateur.
